# EUROPÄISCHE PATENTSCHRIFT

(11) **EP 2 825 812 B1**
(45) Veröffentlichungstag und Bekanntmachung des Hinweises auf die Patenterteilung: **05.09.2018**
(21) Anmeldenummer: 13709083.3
(22) Anmeldetag: 11.03.2013
(51) Int. Cl.: F16P 3/14

(54) **VERFAHREN UND VORRICHTUNG ZUM ABSICHERN EINES GEFÄHRLICHEN ARBEITSBEREICHS EINER AUTOMATISIERT ARBEITENDEN MASCHINE**
METHOD AND DEVICE FOR SECURING A HAZARDOUS WORKING AREA OF AN AUTOMATED MACHINE
PROCÉDÉ ET DISPOSITIF DESTINÉS SÉCURISER UNE ZONE DE TRAVAIL DANGEREUSE D'UNE MACHINE À FONCTIONNEMENT AUTOMATIQUE.

(30) Priorität: 16.03.2012 DE 102012102236
(43) Veröffentlichungstag der Anmeldung: 21.01.2015
(73) Patentinhaber: Pilz GmbH & Co. KG, 73760 Ostfildern (DE)
(72) Erfinder: DOETTLING, Dietmar, 73760 Ostfildern (DE); PILZ, Thomas, 73760 Ostfildern (DE); FRANK, Ruediger, 73760 Ostfildern (DE); HUFNAGEL, Mark, 73760 Ostfildern (DE)
(74) Vertreter: Witte, Weller & Partner Patentanwälte mbB
(86) Internationale Anmeldenummer: PCT/EP2013/054833
(87) Internationale Veröffentlichungsnummer: WO 2013/135608

(56) Entgegenhaltungen:
- EP-A1- 1 418 380
- EP-A1- 1 586 805
- EP-A1- 2 282 106
- WO-A1-2004/029502
- DE-A1-102006 008 805
- DE-A1-102009 031 804

## Beschreibung

Die vorliegende Erfindung betrifft ein Verfahren und eine Vorrichtung zum Absichern eines gefährlichen Arbeitsbereichs einer automatisiert arbeitenden Maschine gemäß den Oberbegriffen der Ansprüche 1 und 13. Insbesondere betrifft die Erfindung ein Verfahren und eine Vorrichtung, bei denen ein jeweils aktuelles 3D Bild von dem Arbeitsbereich aufgenommen und ausgewertet wird, um eine Gefahr für Personen, die in den Arbeitsbereich eintreten, zu vermeiden.

Traditionell werden die Gefahrenbereiche von automatisiert arbeitenden Maschinen mit mechanischen Absperrungen in Form von Schutzzäunen und Schutztüren und mithilfe von Lichtschranken, Lichtgittern und Laserscannern abgesperrt. Sobald eine Person eine Schutztür öffnet oder ein Lichtgitter oder eine Lichtschranke unterbricht, wird ein Abschaltsignal erzeugt, mit dem die gefährliche Arbeitsbewegung der Maschine angehalten wird. Die Installation derartiger Schutzeinrichtungen ist allerdings recht aufwändig, und die Schutzeinrichtungen benötigen viel Platz um eine gefährliche Maschine herum. Außerdem sind derartige Schutzeinrichtungen wenig flexibel, wenn es darum geht, die Absicherung des gefährlichen Arbeitsbereichs an unterschiedliche Betriebssituationen der Maschine anzupassen.

Um diese Nachteile zu vermeiden, gibt es seit einiger Zeit Bemühungen, die Absicherung des gefährlichen Arbeitsbereichs einer automatisiert arbeitenden Maschine mithilfe von Kamerasystemen und geeigneter Bildverarbeitung zu realisieren. EP 1 543 270 B1 (entspricht WO 2004/029502 A1) offenbart das Verfahren und die Vorrichtung gemäß dem Oberbegriff der Ansprüche 1 und 13 und beschreibt ein solches System mit zumindest zwei Kameras, die zyklisch Bilder von dem gefährlichen Arbeitsbereich liefern. Die Bilder der Kameras werden mit zumindest zwei algorithmisch unterschiedlichen Verfahren analysiert, wobei die gefährliche Arbeitsbewegung der Maschine angehalten wird, wenn zumindest eines der beiden Verfahren eine Fremdobjektdetektion in einem zuvor definierten Schutzbereich liefert. Jedes der beiden Analyseverfahren erzeugt 3D Informationen aus den Bildern der Kameras, so dass mithilfe der Verfahren die Position von Objekten in dem definierten Schutzbereich festgestellt werden kann. Eine große Herausforderung an solche Verfahren und Vorrichtungen besteht darin, dass die ohnehin schon komplexe Bildverarbeitung fehlersicher im Sinne einschlägiger Normen zur Maschinensicherheit realisiert sein muss, insbesondere EN 954-1 (veraltet), EN ISO 13849-1 und IEC 61508, damit eine solche Vorrichtung tatsächlich auch zur Absicherung einer gefährlichen Maschine eingesetzt werden kann. Ein Versagen der Vorrichtung selbst darf nicht dazu führen, dass die Absicherung der Maschine verloren geht. Als fehlersicher in diesem Sinne gilt im folgenden daher eine Vorrichtung, die zumindest die Kategorie 3 gemäß EN 954-1, SIL 2 gemäß IEC 61508 und/oder den Performance Level PL (d) gemäß EN ISO 13849 erreicht.

Das aus EP 1 543 270 B1 bekannte Verfahren und eine entsprechende Vorrichtung können dies leisten und haben sich in praktischen Einsätzen bereits bewährt. Allerdings kann die bekannte Vorrichtung bislang lediglich detektieren, ob sich ein Fremdobjekt in einem zuvor definierten Schutzbereich befindet, um in Abhängigkeit davon eine gefährliche Maschinenbewegung abzubremsen oder anzuhalten. Eine Mensch-Maschine-Interaktion in unmittelbarer Nachbarschaft von Mensch und Maschine sowie eine flexible Anpassung an wechselnde Betriebssituationen und/oder in Abhängigkeit von der Art des Fremdobjekts sind mit der bekannten Vorrichtung nicht ohne weiteres möglich. Es besteht daher der Wunsch, das bekannte Verfahren und die entsprechende Vorrichtung weiterzuentwickeln, um insbesondere eine Mensch-Roboter-Kollaboration (Human Robot Interaction) innerhalb des gefährlichen Arbeitsbereichs eines Roboters zu ermöglichen. Beispielsweise ist es wünschenswert, dass sich ein Mensch im prinzipiell gefährlichen Arbeitsbereich des Roboters aufhalten kann, während der Roboter arbeitet, um die Bearbeitungsprozesse des Roboters vor Ort zu überwachen oder um ein Werkstück gleichzeitig oder wechselweise mit dem Roboter zu bearbeiten. Trotzdem muss weiterhin sichergestellt sein, dass der Mensch durch Arbeitsbewegungen des Roboters nicht verletzt wird.

DE 10 2007 007 576 A1 schlägt ein Verfahren und eine Vorrichtung zum Absichern des gefährlichen Arbeitsbereichs eines Roboters vor, wobei ein 3D Bild von dem Arbeitsbereich erstellt und einer Person, die sich innerhalb des Arbeitsbereichs aufhält, ein kinematisiertes Menschenmodell zugeordnet wird. Das 3D Bild wird dahingehend analysiert, ob der Ist-Zustand des Arbeitsbereichs von einem Soll-Zustand des Arbeitsbereichs abweicht, wobei die Sollposition der Person über das kinematisierte Menschenmodell berücksichtigt wird. Dieses Verfahren und die entsprechende Vorrichtung sollen eine Mensch-Roboter-Kollaboration ermöglichen. Aufgrund des Soll-Ist-Vergleichs muss sich eine Person im Arbeitsbereich des Roboters allerdings genau so bewegen, wie es dem Soll-Zustand in dem kinematisierten Menschenmodell entspricht. Eine entsprechende Modellbildung erscheint aufwändig, und sie begrenzt in jedem Fall die Flexibilität, da eine Anpassung an neue Betriebssituationen jeweils eine neue Modellbildung erfordert. Darüber hinaus schlägt DE 10 2007 007 576 A1 zwar die Verwendung von Scannern als Sensoreinheiten vor, die eine Einfehlersicherheit gemäß Kategorie 3 der EN 954-1 aufweisen. Ferner wird eine zyklische oder kontinuierliche Überprüfung der Funktionstüchtigkeit der Sensoreinheiten vorgeschlagen, und die Bewegungen des Roboters während der Überprüfungsphase sollen in sicherer Technik überwacht werden, wie zum Beispiel durch redundante Erfassung und Auswertung der Achsstellungen des Robotersystems. DE 10 2007 007 576 A1 enthält jedoch keinen Hinweis darauf, dass die Auswertung der 3D Bilder und die zugrunde liegende Modellbildung die für eine Absicherung von gefährlichen Arbeitsbereichen erforderliche Fehlersicherheit bieten können.

DE 10 2005 003 827 A1 offenbart eine ähnliche Vorrichtung und ein entsprechendes Verfahren zur Interaktion zwischen einem Menschen und einem Roboter, wobei auch hier ein modellbasierter Ansatz vorgeschlagen wird. Das beschriebene Verfahren erscheint sehr rechenintensiv und komplex, und es ist daher zweifelhaft, ob die für den beabsichtigten Einsatzzweck erforderliche Fehlersicherheit und Reaktionsgeschwindigkeit mit heutigen Rechnerleistungen erreichbar sind.

DE 10 2009 031 804 A1 beschreibt ein Verfahren zur Objekterkennung und Objektverfolgung. DE 10 2006 048 166 A1 beschreibt ein Verfahren zur Beobachtung einer Person in einem industriellen Umfeld. In beiden Fällen wird eine Mensch-Maschine-Interaktion als ein mögliches Anwendungsgebiet vorgeschlagen. Keines der Verfahren bietet jedoch die für diesen Einsatzzweck benötigte Fehlersicherheit.

DE 20 2004 020 863 U1 beschreibt eine Vorrichtung zur Absicherung eines gefährlichen Arbeitsbereichs einer Maschine, wobei die Vorrichtung einerseits Lichtgitter beinhaltet, die das Eintreten einer Person in den Arbeitsbereich mit einer hohen Fehlersicherheit detektieren. Außerdem beinhaltet die Vorrichtung einen Laserscanner, der den Arbeitsbereich hinter den Lichtgittern in einer horizontalen Ebene abtastet. Der Laserscanner ist dazu ausgebildet, die Position eines erfassten Objekts zu bestimmen. Die Lichtgitter und der Laserscanner sind derart gekoppelt, dass ein Maschinenstopp erfolgt, wenn ein Lichtgitter unterbrochen wurde und der Laserscanner im Folgenden kein Fremdobjekt in einem als weniger gefährlich eingestuften Teilbereich des Arbeitsbereichs detektiert.

EP 1 586 805 A1 beschreibt ein Verfahren zur Überwachung eines Bereichs an einer Maschine, wie etwa eine Biegepresse, wobei Bilder von zwei Videokameras verwendet werden, deren Sichtfelder sich zumindest teilweise überschneiden. Auf der Basis der ersten Videobilder wird eine erste Erkennung und/oder Verfolgung von Objekten durchgeführt. Auf der Basis der zweiten Videobilder wird eine zweite Erkennung und/oder Verfolgung von Objekten durchgeführt. Zur Klassifizierung und/oder Bestimmung der Lage und/oder Bewegung wenigstens eines Gegenstandes werden dem Gegenstand entsprechende Objekte der ersten und zweiten Objekterkennung ermittelt. In Abhängigkeit von der Auswertung wird wenigstens ein Überwachungssignal erzeugt.

EP 1 418 380 A1 beschreibt ein Verfahren und eine Vorrichtung zur Überwachung eines Arbeitsbereichs mithilfe einer Kamera. In einem ersten Verfahrensschritt wird eine objektfreie Schutzzone mithilfe der Kamera als Referenzhintergrund aufgenommen. Anschließend wird der Referenzhintergrund in Bezug auf dessen Inhomogenität überprüft. Im Betrieb werden aktuelle Bilder der Schutzzone mit dem Referenzhintergrund verglichen. Ein sicherheitskritisches Objekt gilt als erkannt, wenn das aktuelle Bild signifikant vom Referenzhintergrund abweicht.

Vor diesem Hintergrund ist es eine Aufgabe der vorliegenden Erfindung, ein Verfahren und eine Vorrichtung der eingangs genannten Art anzugeben, die auf möglichst einfache und effiziente Weise den flexiblen Aufenthalt von Personen in dem gefährlichen Arbeitsbereich einer automatisiert arbeitenden Maschine ermöglichen, wobei die für eine solche Anwendung erforderliche Absicherung der Maschine und die erforderliche Fehlersicherheit gewährleistet sind.

Gemäß einem ersten Aspekt der Erfindung wird diese Aufgabe durch ein Verfahren zum Absichern eines gefährlichen Arbeitsbereichs einer automatisiert arbeitenden Maschine gelöst, mit den Schritten:
- Bereitstellen von zumindest einer Sensoreinheit, die in definierten Zeitintervallen jeweils ein aktuelles 3D Bild von dem Arbeitsbereich liefert,
- Definieren von zumindest einem Schutzbereich in dem Arbeitsbereich,
- Zyklisches Überwachen des Schutzbereichs mithilfe eines fehlersicheren Fremdobjektdetektors, der in Abhängigkeit von dem jeweils aktuellen 3D Bild und dem definierten Schutzbereich ein erstes Signal erzeugt, wenn ein Fremdobjekt in dem Schutzbereich detektiert wird, wobei das erste Signal eine erste Positionsinformation beinhaltet, die für eine Position des Fremdobjekts in dem Schutzbereich repräsentativ ist,
- Zyklisches Klassifizieren des Fremdobjekts in dem Schutzbereich mithilfe eines Klassifizierers, wobei der Klassifizierer ein zweites Signal erzeugt, wenn das Fremdobjekt als eine Person identifiziert wird, und wobei die Maschine in Abhängigkeit von dem ersten und zumindest dem zweiten Signal betrieben wird,
- Verfolgen der identifizierten Person über eine Serie von den jeweils aktuellen 3D Bildern mithilfe eines Personenfolgers, wobei der Personenfolger nach jedem neuen 3D Bild eine zweite Positionsinformation bestimmt, die eine aktuelle Position der identifizierten Person in dem Schutzbereich repräsentiert, und
- Vergleichen der ersten und zweiten Positionsinformationen, um zu prüfen, ob die erste Positionsinformation des Fremdobjektdetektors und die zweite Positionsinformation des Personenfolgers jeweils gleiche Positionen repräsentieren, wobei die Maschine angehalten wird, wenn die Position des Fremdobjekts gemäß der ersten Positionsinformation und die Position der identifizierten Person gemäß der zweiten Positionsinformation verschieden voneinander sind.

Gemäß einem weiteren Aspekt der Erfindung wird diese Aufgabe durch eine Vorrichtung zum Absichern eines gefährlichen Arbeitsbereichs einer automatisiert arbeitenden Maschine gelöst, mit zumindest einer Sensoreinheit, die in definierten Zeitintervallen jeweils ein aktuelles 3D Bild von dem Arbeitsbereich liefert, mit einer Konfigurationseinheit zum Definieren von zumindest einem Schutzbereich in dem Arbeitsbereich, und mit einer Auswerteeinheit, die einen fehlersicheren Fremdobjektdetektor, einen Klassifizierer, einen Personenfolger, einen Vergleicher und eine Ausgangsstufe aufweist, wobei der Fremdobjektdetektor dazu ausgebildet ist, in Abhängigkeit von dem jeweils aktuellen 3D Bild und dem definierten Schutzbereich zyklisch ein erstes Signal zu erzeugen, wenn ein Fremdobjekt in dem Schutzbereich ist, wobei das erste Signal eine erste Positionsinformation beinhaltet, die für eine Position des Fremdobjekts in dem Schutzbereich repräsentativ ist, wobei der Klassifizierer dazu ausgebildet ist, zyklisch ein zweites Signal zu erzeugen, wenn das Fremdobjekt als eine Person identifiziert ist, wobei der Personenfolger dazu ausgebildet ist, die identifizierte Person über eine Serie von den jeweils aktuellen 3D Bildern zu verfolgen und nach jedem neuen 3D Bild eine zweite Positionsinformation zu bestimmen, die eine aktuelle Position der identifizierten Person in dem Schutzbereich repräsentiert, wobei der Vergleicher dazu ausgebildet ist, die erste und zweite Positionsinformation zu vergleichen, um zu prüfen, ob die erste Positionsinformation des Fremdobjektdetektors und die zweite Positionsinformation des Personenfolgers jeweils gleiche Positionen repräsentieren, und in Abhängigkeit davon ein drittes Signal zu erzeugen, und wobei die Ausgangsstufe dazu ausgebildet ist, ein Steuersignal zum Anhalten der Maschine in Abhängigkeit von dem zweiten und in Abhängigkeit von dem dritten Signal zu erzeugen, wobei das Steuersignal dazu ausgebildet ist, die Maschine anzuhalten, wenn die Position des Fremdobjekts gemäß der ersten Positionsinformation und Position der identifizierten Person gemäß der zweiten Positionsinformation verschieden voneinander sind.

Besonders vorteilhaft ist es, wenn das neue Verfahren und die neue Vorrichtung mithilfe eines Computerprogrammprodukts mit Programmcode realisiert werden, der dazu ausgebildet ist, das genannte Verfahren auszuführen, wenn der Programmcode auf der Auswerteeinheit ausgeführt wird. Dementsprechend sind der Fremdobjektdetektor, der Klassifizierer, der Personenfolger und der Vergleicher in bevorzugten Ausführungsbeispielen in Form von Softwaremodulen realisiert, die in der Auswerteeinheit automatisch ausgeführt werden.

Das neue Verfahren und die neue Vorrichtung verwenden einen fehlersicheren Fremdobjektdetektor, der immer dann ein definiertes erstes Signal erzeugt, wenn sich ein Fremdobjekt in einem zuvor definierten Schutzbereich innerhalb des abzusichernden Arbeitsbereichs befindet. In bevorzugten Ausführungsbeispielen ist ein Fremdobjekt in diesem Sinne jede Person und jeder Gegenstand, die sich im definierten Schutzbereich befinden. In diesen Ausführungsbeispielen muss ein definierter Schutzbereich also "leer" sein, damit es nicht zu einer Fremdobjektdetektion kommt. In anderen Ausführungsbeispielen ist es aber denkbar, bestimmte Objekte, die bei der Definition des Schutzbereichs schon vorhanden waren, wie zum Beispiel ein Schaltschrank oder ein Stützpfeiler einer Werkhalle, als bekannte Objekte im Schutzbereich zu akzeptieren, so dass nur Personen und Gegenstände als Fremdobjekte detektiert werden, die bei der Definition des Schutzbereichs noch nicht in diesem Schutzbereich vorhanden waren. In diesen Fällen kann der Fremdobjektdetektor die Fremdobjekte beispielsweise daran erkennen, dass sie in einem zum Vergleich herangezogenen Referenzbild nicht vorhanden waren.

In den bevorzugten Ausführungsbeispielen ist der Fremdobjektdetektor lediglich in der Lage, die Existenz und die Position eines Fremdobjekts in dem Schutzbereich zu detektieren und zu bestimmen. Er ist hingegen nicht in der Lage, das detektierte Fremdobjekt hinsichtlich seiner individuellen Eigenschaften genauer zu klassifizieren, insbesondere zu entscheiden, ob es sich um eine Person, um ein Werkstück für die Maschine oder um eine sonstigen Gegenstand handelt. Allerdings ist der Fremdobjektdetektor fehlersicher im Sinne der obigen Definition realisiert. In einem bevorzugten Ausführungsbeispiel ist der Fremdobjektdetektor mithilfe von zwei diversitär-redundanten 3D Analyseverfahren realisiert, wie dies in der eingangs genannten EP 1 543 270 B1 beschrieben ist. In dem bevorzugten Ausführungsbeispiel kommen zwei verschiedene Szenenanalyseverfahren zum Einsatz, mit denen jeweils Bildpaare eines Stereokamerasystems ausgewertet werden. In einem anderen Ausführungsbeispiel kann ein 3D Bildauswerteverfahren für das Bildpaar eines Stereokamerasystems mit einem Laufzeitmessverfahren eines Scanners und/oder einer 3D Laufzeitkamera kombiniert sein. Darüber hinaus kann der Fehlerdetektor auch mit anderen Sensoreinheiten und/oder Kombinationen von Sensoreinheiten realisiert sein, die eine fehlersichere Positionsinformation für ein im Schutzbereich detektiertes Fremdobjekt liefern.

Darüber hinaus verwenden das neue Verfahren und die neue Vorrichtung einen Klassifizierer und einen Personenfolger. Der Klassifizierer ist in der Lage, zu entscheiden, ob ein detektiertes Fremdobjekt im Schutzbereich eine Person ist oder nicht. Der Personenfolger verfolgt die Position einer identifizierten Person über eine Serie der in den definierten Zeitintervallen aufgenommenen 3D Bilder, und er ist somit in der Lage, zu jedem aktuellen 3D Bild die Position der identifizierten Person zu bestimmen. Da der Personenfolger für "seine" Positionsbestimmung die Identifikation der Person voraussetzt, kann die zweite Positionsinformation verschieden von der ersten Positionsinformation sein.

Genau hier setzt ein Teilaspekt der Erfindung an. Anschließend vergleicht der Vergleicher nämlich die erhaltenen Positionsinformationen, d.h. er vergleicht die fehlersicher bestimmte Positionsinformation für das nicht-identifizierte Fremdobjekt und die weitere Positionsinformation der identifizierten Person. Letztere muss aufgrund der Erfindung nicht zwingend als fehlersichere Positionsinformation vorliegen, da die Maschine schon angehalten wird, wenn die fehlersicher bestimmte Position des Fremdobjekts und die zweite Positionsinformation unterschiedliche Positionen repräsentieren. Mit anderen Worten dient der fehlersichere Fremdobjektdetektor bei dem neuen Verfahren und der neuen Vorrichtung unter anderem dazu, die zweite Positionsinformation anhand einer fehlersicheren Referenz zu verifizieren. Aufgrund des Vergleichs ist dann auch die zweite personenbezogene Positionsinformation fehlersicher, selbst wenn der Klassifizierer und der Personenfolger für sich genommen nicht fehlersicher sind, da ein Fehler bei der Bestimmung der zweiten Positionsinformation aufgrund des Vergleichs dazu führt, dass die gefährliche Maschine in einen sicheren Zustand gebracht wird.

Die Detektion eines Fremdobjekts innerhalb eines definierten Schutzbereichs und die fehlersichere Bestimmung seiner Position ist zwar schon eine anspruchsvolle Aufgabe. Eine fehlersichere Klassifizierung und Positionsbestimmung für eine zuvor identifizierte Person stellt jedoch noch höhere Anforderungen an Rechenleistung, und eine fehlersichere Implementierung ist zumindest bislang nicht bekannt. Durch die Kombination der fehlersicheren Fremdobjektdetektion mit einer vorzugsweise nichtfehlersicheren Klassifizierung und Personenverfolgung sind die neue Vorrichtung und das neue Verfahren jedoch in der Lage, die obengenannte Aufgabe zu lösen. Die Personenverfolgung macht es möglich, die Arbeitsbewegung der gefährlichen Maschine auch dann zuzulassen, wenn sich eine Person in dem Arbeitsbereich befindet, vorausgesetzt, der aktuelle Abstand zwischen der Person und der Maschine schließt eine unmittelbare Gefährdung der Person immer noch aus. Da beispielsweise Roboter häufig einen sehr großen Arbeitsbereich benötigen, der Roboter zu einem Zeitpunkt aber nur in einem Teil des gesamten Arbeitsbereichs ist, ermöglicht die neue Kombination von Fremdobjektdetektor und ggf. nicht-fehlersicherem Personenfolger eine insgesamt fehlersichere und flexiblere Kollaboration. Dabei sind der Aufwand und die Kosten für die praktische Realisierung geringer als bei einer in allen Teilkomponenten fehlersicheren Realisierung. Die obengenannte Aufgabe ist daher vollständig gelöst.

Darüber hinaus besitzen das neue Verfahren und die neue Vorrichtung den Vorteil, dass der rechenintensive Klassifizierer und Personenfolger ohne zusätzliche fehlersichernde Maßnahmen implementiert werden können, was sich vorteilhaft auf die Reaktionszeiten des neuen Verfahrens und der neuen Vorrichtung auswirkt.

In einer bevorzugten Ausgestaltung der Erfindung wird die Maschine ferner angehalten, wenn der Klassifizierer das Fremdobjekt nicht als Person identifiziert, wobei die Maschine weiterbetrieben werden kann, wenn der Klassifizierer das Fremdobjekt als Person identifiziert.

In dieser Ausgestaltung nimmt der Klassifizierer direkten Einfluss auf ein etwaiges Stillsetzen der Maschine aus Sicherheitsgründen, nämlich wenn das Fremdobjekt nicht als Person identifiziert wird. In weiteren Ausgestaltungen kann es allerdings sein, dass die Maschine aus anderen Gründen angehalten wird, auch wenn der Klassifizierer das Fremdobjekt als Person identifiziert hat. Dies steht der hier bevorzugten Ausgestaltung nicht entgegen, sondern ergänzt diese gegebenenfalls. Das Anhalten der Maschine gemäß der hiesigen Ausgestaltung erleichtert es, einen fehlersicheren Betrieb auch bei Eintritt von Personen in den Schutzbereich zu gewährleisten, da der verwendete Personenfolger die Identifikation einer Person voraussetzt. Wenn der Klassifizierer das Fremdobjekt nicht als Person identifiziert, kann es sich um eine Fehldetektion handeln, die aus Sicherheitsgründen nicht toleriert werden soll. Alternativ ist es möglich, dass das detektierte Fremdobjekt keine Person ist, sondern beispielsweise ein Gegenstand, der in den Schutzbereich hineingefallen ist. Auch ein solches Ereignis soll durch das neue Verfahren und die entsprechende Vorrichtung nicht toleriert werden, da es die Sicherheit von Bedienpersonen im Arbeitsbereich gefährden kann. Beispielsweise wäre es denkbar, dass ein nicht identifiziertes Fremdobjekt die Bestimmung der ersten oder zweiten Positionsinformation verfälscht oder dass eine Roboterbewegung erst aufgrund des nicht identifizierten Fremdobjekts zu einer Gefahrensituation führt. Die vorliegende Ausgestaltung trägt daher dazu bei, die Absicherung von Bedienpersonen im Arbeitsbereich einer Maschine auf einfache Weise zu verbessern. Dies gilt insbesondere, wenn die Maschine angehalten wird, wenn ein zuvor bereits als Person identifiziertes Fremdobjekt nach Erhalt eines aktuellen 3D Bildes nicht mehr als Person identifiziert wird, was beispielsweise der Fall sein kann, wenn eine Person einen Gegenstand in den Arbeitsbereich hineinträgt und dort abstellt.

In einer weiteren Ausgestaltung besitzt der Klassifizierer eine Personendatenbank mit Personendaten, die eine Anzahl ausgewählter Personen charakterisieren, wobei die Maschine nur weiterbetrieben wird, wenn der Klassifizierer das Fremdobjekt anhand der Personendaten als eine der ausgewählten Personen identifiziert.

In dieser Ausgestaltung erkennt der Klassifizierer nicht nur, ob das Fremdobjekt im Schutzbereich überhaupt eine Person ist, sondern der Klassifizierer kann darüber hinaus erkennen, ob es sich um eine definierte und bekannte Person handelt. Diese Ausgestaltung macht es möglich, die Bewegung der Maschine in Abhängigkeit davon zu steuern, ob etwa eine autorisierte Wartungs- oder Bedienperson in den Schutzbereich eintritt oder eine nicht-autorisierte Person. Beispielsweise kann mit dieser Ausgestaltung das Einrichten eines Arbeitsablaufs durch einen erfahrenen Maschinenbediener erleichtert werden, während der Eintritt einer unbekannten und/oder nicht-autorisierten Person durch optische und/oder akustische Warnsignale angezeigt und die Maschine zur Vermeidung einer Gefährdung der unbekannten Person angehalten wird. Diese Ausgestaltung kann vorteilhaft kombiniert werden mit einer weiteren Ausgestaltung, wonach in dem Arbeitsbereich mehrere, räumlich gestaffelte Schutzbereiche definiert sind. Ein äußerer Schutzbereich kann dann zum Auslösen eines Warn- oder Alarmsignals dienen, während die Maschine noch weiterbetrieben werden kann und erst beim Eintritt der unbekannten Person in einen inneren Schutzbereich angehalten wird. Es versteht sich, dass derartig gestaffelte Schutzbereiche auch in anderen vorteilhaften Ausgestaltungen zur Anwendung kommen können, insbesondere wenn der Eintritt einer Person in einen äußeren Schutzbereich nicht zum Anhalten der Maschine, sondern lediglich zu einer verlangsamten Arbeitsbewegung führen soll und erst der Eintritt in einen inneren Schutzbereich zum Anhalten führt.

In einer weiteren Ausgestaltung besitzt der Klassifizierer eine Teiledatenbank mit Teiledaten, die eine Anzahl ausgewählter Teile charakterisieren, wobei die Maschine weiterbetrieben wird, wenn der Klassifizierer das Fremdobjekt anhand der Teiledaten als ein Teil identifiziert, das in den Schutzbereich eindringen darf.

Diese Ausgestaltung ermöglicht ein vorteilhaftes Muting und/oder Blanking, d.h. das Zuführen von Werkstücken oder anderen Teilen, die im normalen Arbeitsablauf der Maschine benötigt werden, ohne die Maschine anhalten zu müssen. Die Ausgestaltung bietet für sich genommen bereits einen Vorteil, sie kann jedoch auch mit der oben erwähnten Ausgestaltung kombiniert sein, wonach die Maschine angehalten wird, wenn der Klassifizierer das Fremdobjekt nicht als Person identifiziert. Es versteht sich, dass die Identifikation des Fremdobjekts als ein ausgewähltes Teil bei einer Kombination dieser Ausgestaltungen nicht zum Anhalten der Maschine führt, wenn das nicht als Person identifizierte Fremdobjekt eines der ausgewählten Teile ist. In einigen Ausführungsbeispielen erfolgt die Identifikation der Teile mithilfe eines sogenannten Template Matching. Dabei werden Bilder und/oder charakteristische Merkmale von Bildern der ausgewählten Teile mit entsprechenden Bildern und/oder Merkmalen des detektierten Fremdobjekts verglichen. Liegt eine hinreichende Identität vor, gilt das Teil als identifiziert.

In einer weiteren Ausgestaltung beinhaltet der Klassifizierer einen Körperteildetektor, mit dessen Hilfe eine Position von Körperteilen der identifizierten Person bestimmt wird.

In dieser Ausgestaltung ist der Klassifizierer nicht nur in der Lage, eine Person als Ganzes zu identifizieren. Er ermöglicht darüber hinaus auch die Identifikation von einzelnen Körperteilen, insbesondere den Gliedmaßen (Armen, Beinen und/oder den Händen). Die identifizierten Körperteile machen es möglich, die Positionsauflösung in Bezug auf die identifizierte Person zu erhöhen, um so beispielsweise zu erkennen, ob die Person ihren Arm in Richtung der Maschine ausstreckt oder nicht. Die erhöhte Positionsauflösung wird in bevorzugten Ausführungsbeispielen vorteilhaft verwendet, um einen zulässigen Mindestabstand zwischen der Person und der Maschine zu bestimmen und zu überwachen. Dementsprechend trägt diese Ausgestaltung dazu bei, eine "Sicherheitshülle" um die Maschine herum zu minimieren. Dies erleichtert eine direkte Mensch-Maschine-Kollaboration. Dabei profitiert der Körperteildetektor in gleicher Weise wie der Klassifizierer und der Personenfolger von der Fehlersicherheit der Fremdobjektdetektion, da die Position des Körperteils weiterhin mit der Position des detektierten Fremdobjekts korrespondieren muss..

In einer weiteren Ausgestaltung sind der Klassifizierer und/oder der Personenfolger nicht-fehlersicher ausgebildet.

In dieser Ausgestaltung erfüllen der Klassifizierer und/oder der Personenfolger für sich genommen nicht die Anforderungen an die Fehlersicherheit, die das Verfahren und die Vorrichtung insgesamt für die oben beschriebene Anwendung erfüllen müssen. Beispielsweise erfüllen der Klassifizierer und/oder Personenfolger jeweils für sich genommen nicht die Anforderungen gemäß SIL2 und/oder PL(d), obwohl das Verfahren und die Vorrichtung insgesamt diese Anforderungen erfüllen. Die Ausgestaltung ermöglicht eine relativ kostengünstige und hinsichtlich der Verarbeitungsgeschwindigkeit schnelle Realisierung mit kurzen Reaktionszeiten. Sie profitiert von den oben erläuterten Vorteilen des neuen Verfahrens und der neuen Vorrichtung in besonderem Maße.

In einer weiteren Ausgestaltung ist der Klassifizierer inaktiv, bis der Fremdobjektdetektor ein Fremdobjekt im Schutzbereich detektiert.

In dieser Ausgestaltung gibt der Fremdobjektdetektor gewissermaßen einen Trigger für den Start und die Ausführung des Klassifizierers und des Personenfolgers. Solange sich kein Fremdobjekt im Schutzbereich befindet, werden der Klassifizierer und der Personenfolger nicht ausgeführt. Die Ausgestaltung besitzt den Vorteil, dass die hohe Rechenleistung für den Klassifizierer und Personenfolger nur abgerufen werden muss, wenn sie zur Absicherung benötigt wird. Solange sich kein Fremdobjekt in dem Schutzbereich befindet, kann die Rechenleistung für andere Zwecke vorteilhaft genutzt werden, etwa um den Fremdobjektdetektor mit einer höheren Auflösung und dementsprechend mit einer höheren Positionsgenauigkeit zu betreiben. Darüber hinaus besitzt diese Ausgestaltung den Vorteil, dass der Klassifizierer bereits mit der bekannten Position des Fremdobjekts starten kann, was einen aufwändigen Suchalgorithmus in dem Klassifizierer erspart. Dies trägt dazu bei, die insgesamt benötigte Rechenleistung zu minimieren und die Erkennungsrate des Klassifizierers/Personenfolgers zu erhöhen.

In einer alternativen Ausgestaltung ist es jedoch auch denkbar, denn Klassifizierer und ggf. den Personenfolger bereits laufen zu lassen, wenn noch kein Fremdobjekt in dem Schutzbereich detektiert wurde, um möglichst frühzeitig Personen zu erkennen und gegebenenfalls den Zutritt in den Schutzbereich "freizuschalten".

In einer weiteren Ausgestaltung ist ein Mindestabstand zu der Maschine definiert, wobei die Maschine angehalten wird, wenn die identifizierte Person im Schutzbereich näher an die Maschine herankommt als der Mindestabstand.

Diese Ausgestaltung verbessert die Absicherung, indem sie ein absolutes Kriterium für das Anhalten der Maschine definiert. Selbst wenn eine Person aufgrund des neuen Verfahrens und der entsprechenden Vorrichtung in dem Schutzbereich ist, wird mit dieser Ausgestaltung sichergestellt, dass ein minimaler Sicherheitsabstand zu der Maschine stets eingehalten wird. In den bevorzugten Ausführungsbeispielen wird der jeweils aktuelle Abstand zwischen der identifizierten Person und der Maschine in Abhängigkeit von einer aktuellen Maschinenposition bestimmt. Bevorzugt erhält die Auswerteeinheit daher fehlersicher Daten, die die aktuelle Position der Maschine repräsentieren. Die fehlersichere Maschinenposition kann in einigen Ausführungsbeispielen von einer fehlersicheren Maschinensteuerung bereitgestellt werden. In anderen Ausführungsbeispielen kann die aktuelle Maschinenposition mithilfe eines - bevorzugt fehlersicheren - kamerabasierten Maschinenpositionsdetektors bestimmt werden, dessen Funktionsweise beispielsweise derjenigen des Fremdobjektdetektors entspricht. Ein Beispiel für einen kamerabasierten Maschinenpositionsdetektor ist in WO 2008/014909 A1 beschrieben. Die Ausgestaltung trägt dazu bei, eine enge Mensch-Maschine-Interaktion zu ermöglichen.

In einer weiteren Ausgestaltung wird der Mindestabstand in Abhängigkeit von der Maschinenbewegung variiert.

In dieser Ausgestaltung erfolgt eine adaptive Anpassung des Mindestabstandes in Abhängigkeit von der Bewegungsbahn, in Abhängigkeit von der Bewegungsgeschwindigkeit und/oder in Abhängigkeit von weiteren Parametern, wie etwa der bewegten Masse der Maschine. Diese Ausgestaltung ermöglicht eine noch engere Mensch-Maschine-Interaktion mit einer sehr flexiblen und situationsabhängigen Absicherung.

In einer weiteren Ausgestaltung wird die Maschine mit reduzierter Geschwindigkeit und/oder mit einer veränderten Bewegungsbahn betrieben, wenn das zweite Signal vorliegt.

Das zweite Signal wird von dem Klassifizierer erzeugt, wenn das Fremdobjekt in dem Schutzbereich als eine Person identifiziert wird. Gemäß dieser Ausgestaltung führt die Identifizierung einer Person dazu, dass die Maschine in einer Weise betrieben wird, die an die Anwesenheit der Person im Arbeitsbereich angepasst ist. Die abgesicherte Maschine reagiert auf die Anwesenheit der Person im Schutzbereich, ohne jedoch die automatisierte Bewegung gänzlich einzustellen. Die Ausgestaltung trägt zu einer erhöhten Produktivität bei, da unnötige Stopps in der Arbeitsbewegung der Maschine vermieden werden. Gleichzeitig begünstigt diese Ausgestaltung die gewünschte Absicherung des gefährlichen Arbeitsbereichs zum Schutz von Personen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte schematische Darstellung einer Sensoreinheit und einer Auswerteeinheit der neuen Vorrichtung,
- Fig.2: eine schematische Darstellung eines Ausführungsbeispiels der neuen Vorrichtung in einer Draufsicht von oben, und
- Fig. 3: ein Flussdiagramm zur Erläuterung eines Ausführungsbeispiels des neuen Verfahrens.

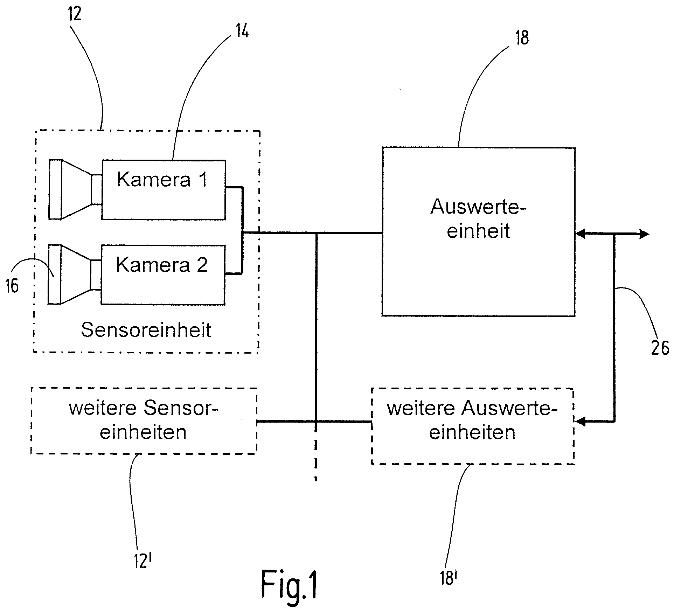

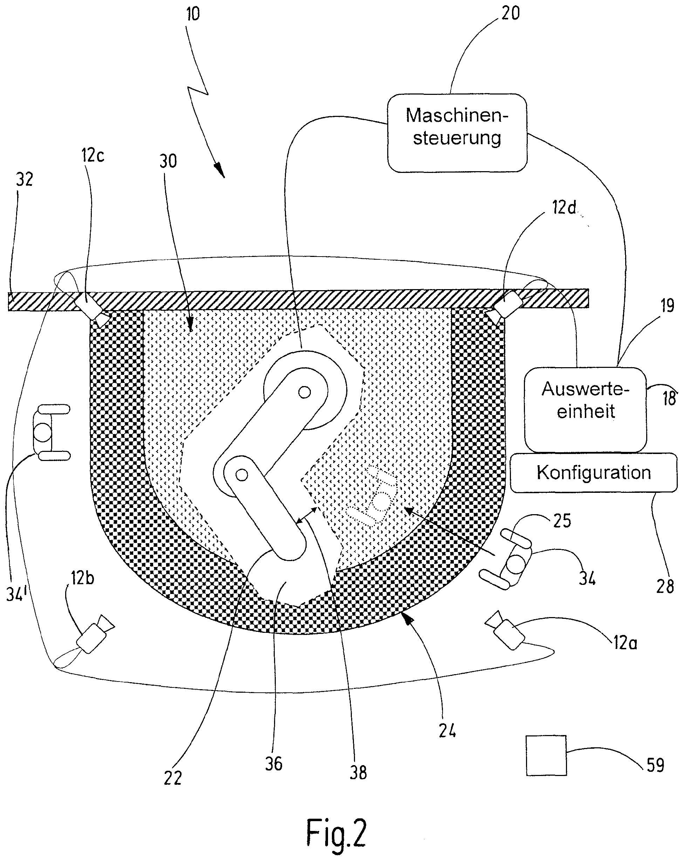

In den Figuren 1 und 2 ist ein bevorzugtes Ausführungsbeispiel der neuen Vorrichtung in seiner Gesamtheit mit der Bezugsziffer 10 bezeichnet.

Die Vorrichtung 10 beinhaltet zumindest eine Sensoreinheit 12, die dazu ausgebildet ist, in definierten Zeitintervallen ein jeweils aktuelles 3D Bild von dem gefährlichen Arbeitsbereich einer automatisiert arbeitenden Maschine zu liefern. In einem bevorzugten Ausführungsbeispiel ist die Sensoreinheit 12 ein Stereo-Kamerasystem, das zumindest eine erste Kamera 14 und eine zweite Kamera 16 aufweist. Die Kameras 14, 16 liefern zwei leicht zueinander versetzte Bilder von dem abzusichernden Arbeitsbereich. Aufgrund des (bekannten) Versatzes der Kameras 14, 16 zueinander und mit Hilfe trigonometrischer Beziehungen kann die Entfernung von der Sensoreinheit 12 zu Objekten in dem Arbeitsbereich anhand der Kamerabilder bestimmt werden. Eine bevorzugte Sensoreinheit ist in der eingangs erwähnten EP 1 543 270 B1 beschrieben, deren Offenbarungsgehalt hier durch Bezugnahme vollumfänglich aufgenommen ist.

In anderen Ausführungsbeispielen kann die Sensoreinheit 12 eine Laufzeitkamera beinhalten. Hierunter ist eine Kamera zu verstehen, die einerseits 2D Bilder eines zu überwachenden Bereichs liefert. Darüber hinaus liefert die Kamera Entfernungsinformationen, die aus einer Laufzeitmessung gewonnen werden. Darüber hinaus kann die Sensoreinheit 12 als 3D Scanner ausgebildet sein und/oder eine andere Technologie verwenden, die es ermöglicht, 3D Bilder von einem abzusichernden Arbeitsbereich zu erzeugen.

In einigen Ausführungsbeispielen kann die Vorrichtung 10 mehrere Sensoreinheiten 12 beinhalten, wie dies in Fig. 2 anhand der Sensoreinheiten 12a, 12b, 12c, 12d dargestellt ist. Darüber hinaus können in anderen Ausführungsbeispielen mehrere 1D und/oder 2D Sensoren paarweise und/oder als Gesamtheit eine 3D Sensoreinheit bilden, die die benötigten 3D Bilder von dem Arbeitsbereich liefert. Es ist also nicht zwingend erforderlich, wenngleich bevorzugt, ein Stereokamerasystem als Sensoreinheit für die neue Vorrichtung zu verwenden.

Die Vorrichtung 10 beinhaltet darüber hinaus eine Auswerteeinheit 18, die in den bevorzugten Ausführungsbeispielen mit einer Maschinensteuerung 20 gekoppelt ist. Die Maschinensteuerung 20 steuert eine automatisiert arbeitende Maschine, die in Fig. 2 schematisch als Roboter 22 dargestellt ist. Die neue Vorrichtung 10 und das neue Verfahren eignen sich insbesondere zum Absichern des gefährlichen Arbeitsbereichs 24 eines Roboters 22. Das Verfahren und die Vorrichtung sind jedoch nicht auf die Absicherung von Robotern beschränkt und können prinzipiell auch zum Absichern von gefährlichen Arbeitsbereichen anderer Maschinen verwendet werden, etwa zum Absichern von automatischen Transport- und Förderstrecken, Kränen, Hebewerkzeugen, Pressen, Bearbeitungszentren und dergleichen.

Die Vorrichtung 10 kann darüber hinaus weitere Sensoreinheiten 12' beinhalten, etwa einen RFID-Leser, mit dessen Hilfe ein sogenannter RFID-Tag 25 detektiert und ausgewertet werden kann. Ein solcher RFID-Tag kann in vorteilhaften Ausführungsbeispielen dazu verwendet werden, eine Bedienperson 34 zu identifizieren, die sich im gefährlichen Arbeitsbereich 24 einer automatisiert arbeitenden Maschine aufhalten darf, um zum Beispiel einen neuen Arbeitsvorgang einzurichten, Wartungs- oder Prüfarbeiten durchzuführen und/oder im Rahmen einer sonstigen Mensch-Maschine-Interaktion.

Wie in Fig. 1 dargestellt ist, kann die Vorrichtung 10 mehrere Auswerteeinheiten 18, 18' beinhalten, die über einen Bus 26 oder ein anderes Kommunikationsmedium miteinander verbunden sind. Darüber hinaus ist es möglich, dass ein Teil der Signal- und Datenverarbeitungsleistung der Sensoreinheit 12 in der Auswerteeinheit 18 untergebracht ist. Beispielsweise kann die Bestimmung der Position eines Objekts anhand der Stereobilder der Kameras 14, 16 in einem Rechner erfolgen, der auch die Auswerteeinheit 18 implementiert, so dass die Sensoreinheit 12 im Sinne der vorliegenden Erfindung nicht zwingend in einem Gehäuse untergebracht sein muss, das physisch von der Auswerteeinheit getrennt ist. Vielmehr kann die Sensoreinheit im Sinne der Erfindung auch auf mehrere Baugruppen und/oder Gehäuse verteilt sein, wenngleich es bevorzugt ist, die Sensoreinheit so kompakt wie möglich zu realiseren.

Mit der Bezugsziffer 28 ist eine Konfigurationseinheit bezeichnet, mit deren Hilfe in dem Arbeitsbereich 24 des Roboters 22 ein Schutzbereich 30 definiert werden kann. Ein bevorzugtes Beispiel für eine solche Konfigurationseinheit 28 ist in der Internationalen Patentanmeldung WO 2007/079883 beschrieben, deren Offenbarungsgehalt hier durch Bezugnahme vollständig aufgenommen ist. Dementsprechend kann es sich bei der Konfigurationseinheit um einen PC handeln, auf dem ein Anwender mithilfe eines Konfigurationstools virtuelle Schutzbereiche in ein 3D Bild des Arbeitsbereichs 24 einzeichnen kann. Das Konfigurationstool erzeugt in Abhängigkeit von den eingezeichneten Schutzbereichen 3D Schutzraumdaten, die der Auswerteeinheit 18 zur Verfügung gestellt werden. Die Auswerteeinheit 18 "weiß" aufgrund der bereitgestellten Schutzraumdaten, welche Teile des Arbeitsbereichs 24 als Schutzbereich im Sinne der vorliegenden Erfindung definiert sind.

Es ist möglich, dass ein Anwender mehrere Schutzbereiche innerhalb des Arbeitsbereichs 24 definiert. In einigen Ausführungsbeispielen können mehrere Schutzbereiche von außen nach innen gestaffelt sein, um beispielsweise eine äußere Warnzone und einen inneren Abschaltbereich um den Roboter 22 herum zu definieren. Des Weiteren ist es möglich, virtuelle Schutzbereiche in verschiedenen Höhen und/oder an verschiedenen Orten zu definieren, um beispielsweise offene Zugänge zu dem Roboter 22 abzusichern. Die virtuellen Schutzbereiche können mit mechanischen Absperrungen, etwa einem Schutzzaun oder einer Wand 32, kombiniert werden.

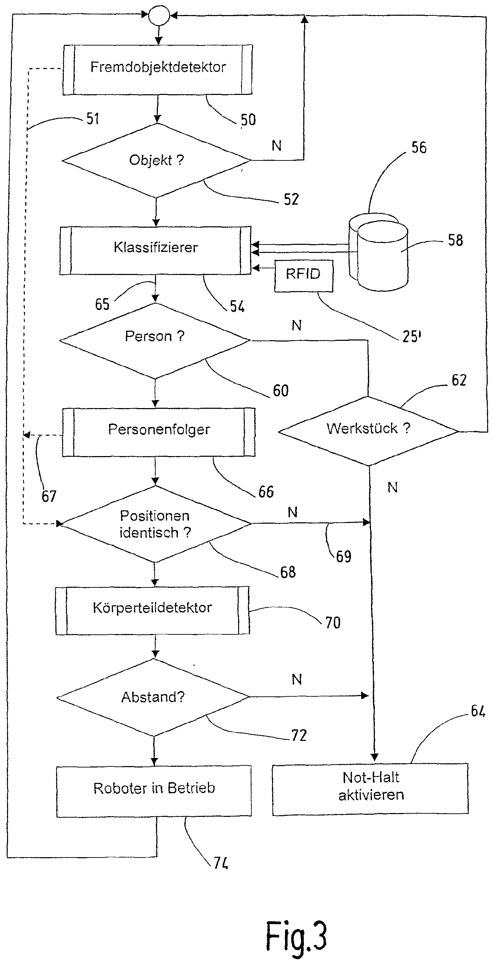

Mit der Bezugsziffer 34 ist eine (erste) Person bezeichnet, die auf den Roboter 22 zugeht und in den Schutzbereich eintritt. Die Person 34 wird mithilfe der neuen Vorrichtung und des neuen Verfahrens identifiziert, wie nachfolgend anhand Fig. 3 näher erläutert ist.

Das neue Verfahren und die neue Vorrichtung sind in der Lage, den Eintritt von mehreren Personen in den Schutzbereich 30 zu detektieren, wie in Fig. 2 beispielhaft bei der Bezugsziffer 34' angedeutet ist. In den bevorzugten Ausführungsbeispielen läuft beim Eintritt einer zweiten Person 34' in den Schutzbereich 30 dasselbe Verfahren ab wie beim Eintritt der ersten Person 34. Vorzugsweise wird die Geschwindigkeit des Roboters 22 reduziert, sobald eine erste Person 34 in den Schutzbereich 30 eintritt, und der Roboter 22 arbeitet mit reduzierter Geschwindigkeit weiter.

Die Position des Roboters 22 und der Person 34 werden in definierten Zeitintervallen wiederholt bestimmt, und es wird geprüft, ob sich die Person 34 und der Roboter 22 zu nahe kommen. Der (in Fig. 2 weiß dargestellte) Bereich 36 um den Roboter 22 herum symbolisiert hier einen Mindestabstand 38, den die Person 34 von dem Roboter 22 stets einhalten muss. Nähert sich die Person 34 dem Roboter 22 so weit, dass der Mindestabstand 38 unterschritten wird, wird dies mithilfe der Auswerteeinheit 18 erkannt. Die Auswerteeinheit 18 erzeugt in diesem Fall ein Steuersignal, mit dessen Hilfe die Maschinensteuerung 20 die Arbeitsbewegung des Roboters 22 sofort stoppt. Der Bereich 36 definiert also eine Art minimaler Schutzhülle, in der sich der Roboter 22 bewegt und in die eine Person 34 in den bevorzugten Ausführungsbeispielen nicht eindringen kann, ohne dass dies zu einem sofortigen Nothalt des Roboters 22 führt. Andererseits kann der Roboter 22 mit reduzierter Geschwindigkeit arbeiten, auch wenn sich die Person 34 in dem Arbeitsbereich 24 und insbesondere in dem Schutzbereich 30 aufhält. In bevorzugten Ausführungsbeispielen wird die Größe der Schutzhülle 36 in Abhängigkeit von der Bewegungsgeschwindigkeit und/oder -richtung des Roboters 22 (allgemeiner einer Maschine) bestimmt. Hierzu erhält die Auswerteeinheit in einigen Ausführungsbeispielen fehlersichere Daten von der Maschinensteuerung 20, die die aktuelle Bewegungsgeschwindigkeit und/oder -richtung repräsentieren.

Betritt die zweite Person 34' den Schutzbereich 30, nachdem die erste Person 34 bereits den Schutzbereich 30 betreten hat, ändert sich an der Arbeitsbewegung des Roboters 22 nichts, solange der Mindestabstand 38 zu beiden Personen 34, 34' eingehalten ist. Wenn beide Personen den Schutzbereich 30 verlassen haben, wird dies von der Auswerteeinheit 18 mithilfe der Sensoreinheit(en) 12 detektiert. Die Auswerteeinheit 18 erzeugt ein entsprechendes Steuersignal für die Maschinensteuerung 20. In den bevorzugten Ausführungsbeispielen setzt der Roboter 22 seine Arbeitsbewegung dann mit hoher Geschwindigkeit fort, ohne dass zuvor eine manuelle Quittierung notwendig ist.

Nachfolgend wird ein bevorzugtes Ausführungsbeispiel des neuen Verfahrens unter Bezugnahme auf Fig. 3 beschrieben. Das Verfahren gemäß Fig. 3 wird mithilfe der Vorrichtung 10 aus Fig. 2 ausgeführt.

Gemäß Schritt 50 verwendet das neue Verfahren einen Fremdobjektdetektor, der in Abhängigkeit von einem aktuellen 3D Bild ein Signal 51 erzeugt, das Positionsinformationen zu allen im Schutzbereich 30 detektierten Objekten beinhaltet. Wie bereits weiter oben erwähnt wurde, beinhaltet der Fremdobjektdetektor 50 in einem bevorzugten Ausführungsbeispiel zwei diversitäre, redundante 3D Szenenanalyseverfahren gemäß EP 1 543 270 B1, mit deren Hilfe eine fehlersichere Objektdetektion und Positionsbestimmung möglich ist. Wenn der Fremdobjektdetektor 50 kein Fremdobjekt 34 in dem Schutzbereich 30 detektiert, kehrt das Verfahren gemäß Schritt 52 zum Startpunkt zurück, das heißt, es wird ein neuer Überwachungszyklus anhand eines neuen 3D Bildes gestartet.

Wird mithilfe des Fremdobjektdetektors 50 jedoch ein Fremdobjekt in dem Schutzbereich 30 detektiert, startet in dem bevorzugten Ausführungsbeispiel ein Klassifizierer gemäß Schritt 54. Der Klassifizierer 54 prüft, ob das detektierte Fremdobjekt 34 eine Person ist. In bevorzugten Ausführungsbeispielen kann der Klassifizierer 54 Datenbanken 56, 58 verwenden. In der Datenbank 56 sind im vorliegenden Ausführungsbeispiel Personendaten hinterlegt, die ausgewählte, definierte Personen charakterisieren. In diesem Ausführungsbeispiel wird die Arbeitsbewegung des Roboters 22 nur zugelassen, wenn eine der ausgewählten Personen in den Schutzbereich 30 hineintritt. Handelt es sich zwar um eine Person, die jedoch nicht bekannt ist bzw. nicht zu den ausgewählten Personen gehört, wird die Arbeitsbewegung des Roboters 22 angehalten. Alternativ oder ergänzend hierzu kann ein Warn- oder Alarmsignal erzeugt werden.

Die Datenbank 58 beinhaltet in diesem Ausführungsbeispiel Teiledaten, die eine Anzahl ausgewählter Teile 59 charakterisieren. Die Teile 59 sind beispielsweise Werkstücke, die zur Bearbeitung in den Schutzbereich 30 hineingeführt werden müssen.

Gemäß Schritt 60 wird geprüft, ob das Fremdobjekt 34 eine (bekannte) Person ist. Ist dies nicht der Fall, wird gemäß Schritt 62 geprüft, ob das detektierte Fremdobjekt ein ausgewähltes Teil 59 ist. Ist dies der Fall, ist das detektierte Fremdobjekt als ausgewähltes Teil identifiziert, dessen Anwesenheit im Schutzbereich 30 zulässig ist. Das Verfahren kehrt dementsprechend zum Ausgangspunkt zurück, um einen neuen Überwachungszyklus zu beginnen. Ist das detektierte Fremdobjekt jedoch kein ausgewähltes Teil, wird gemäß Schritt 64 ein Nothalt des Roboters 22 aktiviert.

Handelt es sich bei dem detektierten Fremdobjekt um eine (bekannte) Person, wird gemäß Schritt 66 ein Personenfolger gestartet, der die identifizierte Person über eine Serie von jeweils aktuellen 3D Bildern verfolgt. Der Personenfolger 66 erzeugt eine Positionsinformation 67, die die aktuelle Position der identifizierten Person in dem Schutzbereich 30 repräsentiert.

Der Klassifizierer 54 und der Personenfolger 66 können beispielsweise mithilfe der Verfahren realisiert sein, wie sie in den eingangs genannten DE 10 2006 048 166 A1 und/oder DE 10 2009 031 804 A1 (jeweils mit zahlreichen weiteren Nachweisen) beschrieben sind. Dementsprechend ist der Offenbarungsgehalt dieser beiden Dokumente hier durch Bezugnahme aufgenommen.

In einigen Ausführungsbeispielen können mehrere verschiedene Verfahren zur Personenidentifikation und -verfolgung zur Anwendung kommen, wobei dies in den bevorzugten Ausführungsbeispielen allein zur Erhöhung der Erkennungsrate und Reduzierung von Fehlalarmen dient, nicht jedoch zur Realisierung einer Fehlersicherheit. In einigen Ausführungsbeispielen sind der Klassifizierer 54 und der Personenfolger 66 daher nicht-fehlersicher im Sinne der einschlägigen Normen zur Maschinensicherheit realisiert. Beispielsweise erfüllen der Klassifizierer 54 und der Personenfolger 66 nicht die Anforderungen gemäß SIL2 und/oder PL(d). Dies bedeutet, dass nach einer detaillierten Fehlerbetrachtung nicht mit hinreichender Wahrscheinlichkeit ausgeschlossen werden kann, dass die Personenidentifikation und insbesondere die Positionsbestimmung für die identifizierte Person korrekt sind.

Gemäß Schritt 68 wird geprüft, ob die erste Positionsinformation des Fremdobjektdetektors 50 und die zweite Positionsinformation des Personenfolgers 66 jeweils gleiche Positionen repräsentieren. Ist dies der Fall, ist die nicht-fehlersicher bestimmte Position der identifizierten Person durch die fehlersichere bestimmte Position des Fremdobjektdetektors 50 verifiziert. Die Position der Person, die der Personenfolger 66 bestimmt hat, kann folglich als fehlersichere Positionsinformation weiterverarbeitet werden. Ergibt der Vergleich in Schritt 68 hingegen, dass die Positionen nicht identisch sind, wird gemäß Schritt 64 der Nothalt des Roboters 22 aktiviert.

Der Vergleich der Positionsinformationen kann in bevorzugten Ausführungsbeispielen anhand von Vergleichsmerkmalen erfolgen, die für die jeweils bestimmte Position repräsentativ sind. Beispielsweise kann die Position der identifizierten Person am Boden des Schutzbereichs 30 mit der entsprechenden Position des detektierten Fremdobjekts am Boden des Schutzbereichs 30 verglichen werden. Alternativ oder ergänzend können die Positionen der vertikalen und horizontalen Hauptachsen des Fremdobjekts und der identifizierten Person 34 miteinander verglichen werden.

Gemäß Schritt 70 erfolgt in dem bevorzugten Ausführungsbeispiel anschließend eine Körperteildetektion sowie die Bestimmung weiterer Positionsinformationen, die die Position einzelner Körperteile der identifizierten Person repräsentieren. Insbesondere wird die Position von ausgestreckten Armen/Händen und/oder ausgestreckten Beinen mithilfe des Körperteildetektors 70 bestimmt. Ein geeignetes Verfahren ist in der bereits genannten DE 10 2009 031 804 A1 und weiteren, dort zitierten Quellen beschrieben.

Gemäß Schritt 72 wird dann geprüft, ob die identifizierte Person - gegebenenfalls unter Berücksichtigung der Position ihrer Körperteile - den Mindestabstand 38 zu dem Roboter 22 einhält. Ist dies nicht der Fall, wird ebenfalls der sofortige Nothalt 64 aktiviert. Anderenfalls bleibt der Roboter 22 gemäß Schritt 74 in Betrieb, und das Verfahren kehrt zum Startpunkt zurück, um einen neuen Überwachungszyklus zu durchlaufen. Der Betrieb 74 kann in dem bevorzugten Ausführungsbeispiel mit einer reduzierten Geschwindigkeit erfolgen. Des Weiteren kann in Abhängigkeit von der Position der identifizierten Person die Bewegungsbahn des Roboters 22 verändert werden. Die Auswerteeinheit 18 erzeugt entsprechende Steuersignale für die Maschinensteuerung 20.

Der Klassifizierer 54, der Personenfolger 66 und der Körperteildetektor 70 sind in dem Flussdiagramm gemäß Fig. 3 als separate Schritte bzw. Blöcke dargestellt. In bevorzugten praktischen Realisierungen sind diese Schritte Softwaremodule, die zusammen ein Computerprogramm bilden, das in der/den Auswerteeinheit(en) 18, 18' der Vorrichtung 10 ausgeführt wird. Dementsprechend sind die Signale, wie etwa das erste Signal 51, das zweite Signal 65 und die Positionsinformation 67 des Personenfolgers 66, in zumindest einigen Ausführungsbeispielen digitale Daten, die bei der Ausführung eines Computerprogramms erzeugt werden.

Die vorliegende Erfindung beschreibt somit einen neuen Ansatz, um komplexe Verfahren, wie insbesondere Personenidentifizierung und -verfolgung, in einem sicherheitsgerichteten System einzusetzen, das zur Absicherung der gefährlichen Arbeitsbewegung einer Maschine dient und das dementsprechend hohe Anforderungen erfüllen muss, die die komplexen Verfahren für sich genommen nicht erfüllen können. Ein Versagen bzw. ein Fehler der komplexen Verfahren führt aufgrund des neuen Ansatzes nicht zu einer gefährlichen Situation. Die Fehlersicherheit des neuen Verfahrens und der neuen Vorrichtung basiert auf bereits bewährten Prinzipien, insbesondere auf der fehlersicheren Fremdobjektdetektion und der fehlersicheren Positionsbestimmung für detektierte Fremdobjekte. Aufgrund des neuen Ansatzes können jedoch die starren Grenzen zwischen Mensch und Maschine, die bisher aus Sicherheitsgründen eingehalten werden mussten, aufgebrochen werden, um eine flexible Interaktion zwischen Mensch und Maschine zu ermöglichen. Bewegungsabläufe und Geschwindigkeiten von Maschinen, insbesondere Robotern, können basierend auf der Identifikation und Lokalisierung von Personen dynamisch verändert und an die jeweilige Betriebssituation angepasst werden. Damit sind "offene" Produktionsanlagen realisierbar.

Der Klassifizierer und der Personenfolger arbeiten in den bevorzugten Ausführungsbeispielen nach einem aktiven Prinzip, das heißt eine Person muss zyklisch wiedererkannt werden und anhand der fehlersicheren Position des Fremdobjektdetektors verifiziert werden. Andernfalls wird die Maschine in einen sicheren Zustand gebracht, was im Rahmen der vorliegenden Erfindung als Nothalt bezeichnet ist.

Betreten zwei Personen gemeinsam (dicht hintereinander) den Schutzbereich, und/oder trägt eine Person einen Gegenstand in den Schutzbereich, ohne dass eine Trennung der zwei Objekte erfolgen kann, werden die beiden Objekte als ein einzelnes Objekt behandelt. Dies ist unter sicherheitstechnischen Aspekten zulässig, gerade weil die beiden Objekte hinsichtlich ihrer Position nicht voneinander unterschieden werden können. Trennen sich die Objekte, sei es weil die zwei Personen sich trennen oder weil die eine Person den Gegenstand abstellt, werden die getrennten Objekte als Einzelobjekte erkannt. Da der Fremdobjektdetektor 50 in den bevorzugten Ausführungsbeispielen den gesamten Schutzbereich 30 überwacht, erfolgt gegebenenfalls sofort ein Nothalt, wie anhand Fig. 3 erläutert wurde.

In bevorzugten Ausführungsbeispielen, in denen ein Körperteildetektor 70 zur Anwendung kommt, erfolgt vorteilhafterweise eine zusätzliche Plausibilitätsprüfung anhand der Positionsinformationen des Körperteildetektors. Ergibt die Plausibilitätsprüfung Unstimmigkeiten, wird in den bevorzugten Ausführungsbeispielen ebenfalls der Nothalt aktiviert. Alternativ kann eine abgestufte Reaktion erfolgen, beispielsweise zunächst die Erzeugung eines Warnsignals. Darüber hinaus kann die Reaktion auch davon abhängig gemacht werden, ob die Plausibilitätsprüfung im nächsten Zyklus zu übereinstimmenden Positionsinformationen führt, um bei hinreichend kurzen Zykluszeiten die Falschalarmrate zu reduzieren

## Patentansprüche

1. Verfahren zum Absichern eines gefährlichen Arbeitsbereichs (24) einer automatisiert arbeitenden Maschine (22), mit den Schritten:
- Bereitstellen von zumindest einer Sensoreinheit (12), die in definierten Zeitintervallen jeweils ein aktuelles 3D Bild von dem Arbeitsbereich (24) liefert,
- Definieren von zumindest einem Schutzbereich (30) in dem Arbeitsbereich (24),
- Zyklisches Überwachen des Schutzbereichs (30) mithilfe eines fehlersicheren Fremdobjektdetektors (50), der in Abhängigkeit von dem jeweils aktuellen 3D Bild und dem definierten Schutzbereich (30) ein erstes Signal (51) erzeugt, wenn ein Fremdobjekt (34) in dem Schutzbereich (30) detektiert wird, wobei das erste Signal (51) eine erste Positionsinformation beinhaltet, die für eine Position des Fremdobjekts (34) in dem Schutzbereich (30) repräsentativ ist,
- Zyklisches Klassifizieren des Fremdobjekts (34) in dem Schutzbereich (30) mithilfe eines Klassifizierers (54),
**dadurch gekennzeichnet, dass** der Klassifizierer (54) ein zweites Signal (65) erzeugt, wenn das Fremdobjekt (34) als eine Person identifiziert wird, wobei die Maschine (22) in Abhängigkeit von dem ersten und zumindest dem zweiten Signal (51, 65) betrieben wird, und ferner mit den Schritten:
- Verfolgen der identifizierten Person (34) über eine Serie von den jeweils aktuellen 3D Bildern mithilfe eines Personenfolgers (66), wobei der Personenfolger (66) nach jedem neuen 3D Bild eine zweite Positionsinformation (67) bestimmt, die eine aktuelle Position der identifizierten Person (34) in dem Schutzbereich (30) repräsentiert, und
- Vergleichen (68) der ersten und zweiten Positionsinformationen, um zu prüfen, ob die erste Positionsinformation des Fremdobjektdetektors (50) und die zweite Positionsinformation (67) des Personenfolgers (66) jeweils gleiche Positionen repräsentieren, wobei die Maschine (22) angehalten wird, wenn die Position des Fremdobjekts (34) gemäß der ersten Positionsinformation und die Position der identifizierten Person gemäß der zweiten Positionsinformation verschieden voneinander sind.

2. Verfahren nach Anspruch 1, wobei die Maschine (22) ferner angehalten wird, wenn der Klassifizierer (54) das Fremdobjekt (34) nicht als Person identifiziert, und wobei die Maschine weiterbetrieben werden kann, wenn der Klassifizierer (54) das Fremdobjekt (34) als Person identifiziert.

3. Verfahren nach Anspruch 2, wobei der Klassifizierer (54) eine Personendatenbank (56) mit Personendaten besitzt, die eine Anzahl ausgewählter Personen charakterisieren, und wobei die Maschine (22) nur weiterbetrieben wird, wenn der Klassifizierer (54) das Fremdobjekt anhand der Personendaten als eine der ausgewählten Person identifiziert.

4. Verfahren nach Anspruch 2 oder 3, wobei der Klassifizierer (54) einen RFID-Leser beinhaltet, mit dessen Hilfe ein RFID-Tag gelesen wird.

5. Verfahren nach einem der Ansprüche 1 bis 4, wobei der Klassifizierer (54) ferner eine Teiledatenbank (58) mit Teiledaten besitzt, die eine Anzahl ausgewählter Teile (59) charakterisieren, und wobei die Maschine (22) weiterbetrieben wird, wenn der Klassifizierer (54) das Fremdobjekt anhand der Teiledaten als ein Teil identifiziert, das in den Schutzbereich (30) eindringen darf.

6. Verfahren nach einem der Ansprüche 1 bis 5, wobei der Klassifizierer (54) einen Körperteildetektor (70) beinhaltet, mit dessen Hilfe eine Position von Körperteilen der identifizierten Person (34) bestimmt wird.

7. Verfahren nach einem der Ansprüche 1 bis 6, wobei der Klassifizierer (54) und/oder der Personenfolger (66) nicht-fehlersicher ausgebildet sind.

8. Verfahren nach einem der Ansprüche 1 bis 7, wobei der Klassifizierer (54) inaktiv ist, bis der Fremdobjektdetektor (50) ein Fremdobjekt im Schutzbereich (30) detektiert.

9. Verfahren nach einem der Ansprüche 1 bis 7, wobei der Klassifizierer (54) bereits aktiv ist, bevor der Fremdobjektdetektor (50) ein Fremdobjekt im Schutzbereich (30) detektiert.

10. Verfahren nach einem der Ansprüche 1 bis 9, wobei ein Mindestabstand (38) zu der Maschine (22) definiert ist, und wobei die Maschine (22) angehalten wird, wenn die identifizierte Person (34) im Schutzbereich (30) näher an die Maschine (22) herankommt als der Mindestabstand (38).

11. Verfahren nach Anspruch 10, wobei der Mindestabstand (38) in Abhängigkeit von einer aktuellen Maschinenbewegung variiert wird.

12. Verfahren nach einem der Ansprüche 1 bis 11, wobei die Maschine (22) mit reduzierter Geschwindigkeit und/oder mit einer veränderten Bewegungsbahn betrieben wird, wenn das zweite Signal (65) vorliegt.

13. Vorrichtung zum Absichern eines gefährlichen Arbeitsbereichs (24) einer automatisiert arbeitenden Maschine (22), mit zumindest einer Sensoreinheit (12), die in definierten Zeitintervallen jeweils ein aktuelles 3D Bild von dem Arbeitsbereich (24) liefert, mit einer Konfigurationseinheit (28) zum Definieren von zumindest einem Schutzbereich (30) in dem Arbeitsbereich (24), und mit einer Auswerteeinheit (18), die einen fehlersicheren Fremdobjektdetektor (50), einen Klassifizierer (54) und eine Ausgangsstufe (19) aufweist, wobei der Fremdobjektdetektor (50) dazu ausgebildet ist, in Abhängigkeit von dem jeweils aktuellen 3D Bild und dem definierten Schutzbereich (30) zyklisch ein erstes Signal (51) zu erzeugen, wenn ein Fremdobjekt in dem Schutzbereich (30) ist, wobei das erste Signal (51) eine erste Positionsinformation beinhaltet, die für eine Position des Fremdobjekts in dem Schutzbereich (30) repräsentativ ist, **gekennzeichnet durch** einen Personenfolger (66) und einen Vergleicher (68) wobei der Klassifizierer (54) dazu ausgebildet ist, zyklisch ein zweites Signal (65) zu erzeugen, wenn das Fremdobjekt als eine Person (34) identifiziert ist, wobei der Personenfolger (66) dazu ausgebildet ist, die identifizierte Person (34) über eine Serie von den jeweils aktuellen 3D Bildern zu verfolgen und nach jedem neuen 3D Bild eine zweite Positionsinformation (67) zu bestimmen, die eine aktuelle Position der identifizierten Person (34) in dem Schutzbereich (30) repräsentiert, wobei der Vergleicher (68) dazu ausgebildet ist, die die erste und zweite Positionsinformation zu vergleichen, um zu prüfen, ob die erste Positionsinformation des Fremdobjektdetektors (50) und die zweite Positionsinformation (67) des Personenfolgers (66) jeweils gleiche Positionen repräsentieren, und in Abhängigkeit davon ein drittes Signal (69) zu erzeugen, und wobei die Ausgangsstufe (19) dazu ausgebildet ist, ein Steuersignal zum Anhalten der Maschine (22) in Abhängigkeit von dem zweiten Signal und in Abhängigkeit von dem dritten Signal zu erzeugen, wobei das Steuersignal dazu ausgebildet ist, die Maschine (22) anzuhalten, wenn die Position des Fremdobjekts gemäß der ersten Positionsinformation und die Position der identifizierten Person gemäß der zweiten Positionsinformation verschieden voneinander sind.

14. Computerprogrammprodukt mit einem Datenträger, auf dem Programmcode gespeichert ist, der dazu ausgebildet ist, ein Verfahren mit allen Verfahrensschritten nach einem der Ansprüche 1 bis 12 auszuführen, wenn der Programmcode auf einer Auswerteeinheit für eine Vorrichtung nach Anspruch 13 ausgeführt wird.

## Claims

1. A method for safeguarding a hazardous working area (24) of an automated machine (22) comprising the steps of:
- providing at least one sensor unit (12) which provides a respective current 3-D image of the working area (24) at defined intervals of time,
- defining at least one protection zone (30) in the working area (24),
- cyclically monitoring the protection zone (30) using a fail-safe foreign object detector (50) which generates a first signal (51) on the basis of the respective current 3-D image and the defined protection zone (30) if a foreign object (34) is detected in the protection zone (30), the first signal (51) comprising a first item of position information which is representative of a position of the foreign object (34) in the protection zone (30),
- cyclically classifying the foreign object (34) in the protection zone (30) using a classifier (54),
**characterized in that** the classifier (54) generates a second signal (65) if the foreign object (34) is identified as a person, wherein the machine (22) is operated on the basis of the first and at least the second signal (51, 65), and further comprising the steps of
- tracking an identified person (34) over a series of the respective current 3-D images using a person tracker (66), the person tracker (66) determining, after each new 3-D image, a second item of position information (67) which represents a current position of the identified person (34) in the protection zone (30), and
- comparing (68) the first and second items of position information in order to determine whether the first item of position information from the foreign object detector (50) and the second item of position information from the person tracker (66) each represent identical positions, wherein the machine (22) is stopped if the position of the foreign object (34) according to the first item of position information and the position of the identified person according to the second item of position information are different from one another.

2. The method of claim 1, wherein the machine (22) is also stopped if the classifier (54) does not identify the foreign object (34) as a person, and wherein the machine is allowed to continue operation if the classifier (54) identifies the foreign object (34) as a person.

3. The method of claim 2, wherein the classifier (54) has a personal database (56) containing personal data which characterize a number of selected persons, and wherein the machine (22) is only allowed to be operated if the classifier (54) identifies the foreign object as one of the selected persons using the personal data.

4. The method of claim 2 or 3, wherein the classifier (54) comprises an RFID reader which is used to read an RFID tag.

5. The method of one of claims 1 to 4, wherein the classifier (54) further comprises a parts database (58) containing parts data which characterize a number of selected parts (59), and wherein the machine (22) is continued to be operated if the classifier (54) identifies the foreign object as a part which is allowed to enter the protection zone (30) using the parts data.

6. The method of one of claims 1 to 5, wherein the classifier (54) comprises a body part detector (70) which is used to determine a position of body parts of the identified person (34).

7. The method of one of claims 1 to 6, wherein the classifier (54) and/or the person tracker (66) having a non-fail-safe design.

8. The method of one of claims 1 to 7, wherein the classifier (54) is inactive until the foreign object detector (50) detects a foreign object in the protection zone (30).

9. The method of one of claims 1 to 7, wherein the classifier (54) is already active before the foreign object detector (50) detects a foreign object in the protection zone (30).

10. The method of one of claims 1 to 9, wherein a minimum distance (38) to the machine (22) is defined, and wherein the machine (22) is stopped if the identified person (34) in the protection zone (30) comes closer to the machine (22) than the minimum distance (38).

11. The method of claim 10, wherein the minimum distance (38) is varied depending on a current machine movement.

12. The method of one of claims 1 to 11, wherein the machine (22) is operated at a reduced speed and/or with a modified movement path if the second signal (65) is present.

13. A device for safeguarding a hazardous working area (24) of an automated machine (22), comprising at least one sensor unit (12) which provides a respective current 3-D image of the working area (24) at defined intervals of time, comprising a configuration unit (28) for defining at least one protection zone (30) in the working area (24), and comprising an evaluation unit (18) which has a fail-safe foreign object detector (50), a classifier (54), and an output stage (19), the foreign object detector (50) being designed to cyclically generate a first signal (51) on the basis of the respective current 3-D image and the defined protection zone (30) if a foreign object is in the protection zone (30), the first signal (51) comprising a first item of position information which is representative of a position of the foreign object in the protection zone (30), **characterized by** a person tracker (66) and a comparator (68), with the classifier (54) being designed to cyclically generate a second signal (65) if the foreign object is identified as a person (34), with the person tracker (66) being designed to track an identified person (34) over a series of the respective current 3-D images and, after each new 3-D image, to determine a second item of position information (67) which represents a current position of the identified person (34) in the protection zone (30), with the comparator (68) being designed to compare the first and second items of position information in order to determine whether the first item of position information from the foreign object detector (50) and the second item of position information from the person tracker (66) each represent identical positions and to generate a third signal (69) on the basis thereof, and with the output stage (19) being designed to generate a control signal for stopping the machine (22) on the basis of the second signal and on the basis of the third signal, with the control signal being designed to stop the machine (22) if the position of the foreign object according to the first item of position information and the position of the identified person according to the second item of position information are different from one another.

14. A computer program product having a data storage medium which stores program code designed to carry out a method having all of the method steps of one of claims 1 to 12 if the program code is executed on an evaluation unit for a device of claim 13.

## Revendications

1. Procédé de sécurisation d'une zone de travail dangereuse (24) d'une machine automatisée (22), comprenant les étapes suivantes :
- prévoir au moins une unité de détection (12) qui fournit une image 3D actuelle de la zone de travail (24) à des intervalles de temps définis,
- définir au moins une zone de protection (30) dans la zone de travail (24),
- surveiller cycliquement la zone de protection (30) à l'aide d'un détecteur d'objets étrangers (50) infaillible, qui génère un premier signal (51) en fonction de l'image 3D actuelle respective et de la zone de protection (30) définie lorsqu'un objet étranger (34) est détecté dans la zone de protection (30), dans lequel le premier signal (51) comprend une première information de position représentative d'une position de l'objet étranger (34) dans la zone de protection (30),
- classer cycliquement l'objet étranger (34) dans la zone de protection (30) à l'aide d'un classificateur (54),
**caractérisé en ce que** le classificateur (54) génère un deuxième signal (65) lorsque l'objet étranger (34) est identifié comme étant une personne,
dans lequel la machine (22) est mise en oeuvre en fonction du premier et au moins du deuxième signal (51, 65), et comprenant en outre les étapes suivantes :
- suivre la personne identifiée (34) dans une série d'images 3D actuelles à l'aide d'un dispositif de suivi de personne (66),
dans lequel le dispositif de suivi de personne (66) détermine après chaque nouvelle image une deuxième information de position (67) représentant une position actuelle de la personne identifiée (34) dans la zone de protection (30), et
- comparer (68) les première et deuxième informations de position pour vérifier si la première information de position du détecteur d'objets étrangers (50) et la deuxième information de position (67) du dispositif de suivi de personne (66) représentent chacune des positions identiques, dans lequel la machine (22) est arrêtée si la position de l'objet étranger (34) selon la première information de position et la position de la personne identifiée selon la deuxième information de position sont différentes l'une de l'autre.

2. Procédé selon la revendication 1, dans lequel la machine (22) est en outre arrêtée si le classificateur (54) n'identifie pas l'objet étranger (34) comme étant une personne, et dans lequel la machine peut continuer à fonctionner lorsque le classificateur (54) identifie l'objet étranger (34) comme étant une personne.

3. Procédé selon la revendication 2, dans lequel le classificateur (54) possède une base de données de personnes (56) contenant des données de personnes caractérisant un nombre de personnes sélectionnées, et dans lequel la machine (22) ne peut en outre continuer à fonctionner que si le classificateur (54) identifie l'objet étranger comme étant l'une des personnes sélectionnées sur la base des données de personnes.

4. Procédé selon la revendication 2 ou 3, dans lequel le classificateur (54) comprend un lecteur RFID qui est utilisé pour lire une étiquette RFID.

5. Procédé selon l'une des revendications 1 à 4, dans lequel le classificateur (54) possède en outre une base de données de pièces (58) contenant des données de pièces caractérisant un nombre de pièces sélectionnées (59), et dans lequel la machine (22) peut en outre continuer à fonctionner lorsque le classificateur (54) identifie l'objet étranger sur la base des données de pièce comme étant une pièce qui peut pénétrer dans la zone de protection (30).

6. Procédé selon l'une des revendications 1 à 5, dans lequel le classificateur (54) comprend un détecteur de parties du corps (70) destiné à déterminer une position de parties du corps de la personne identifiée (34).

7. Procédé selon l'une des revendications 1 à 6, dans lequel le classificateur (54) et/ou le dispositif de suivi de personne (66) est/sont de type infaillible.

8. Procédé selon l'une des revendications 1 à 7, dans lequel le classificateur (54) est inactif jusqu'à ce que le détecteur d'objets étrangers (50) détecte un objet étranger dans la zone de protection (30).

9. Procédé selon l'une des revendications 1 à 7, dans lequel le classificateur (54) est déjà actif avant que le détecteur d'objets étrangers (50) détecte un objet étranger dans la zone de protection (30).

10. Procédé selon l'une des revendications 1 à 9, dans lequel une distance minimale (38) par rapport à la machine (22) est définie, et la machine (22) est arrêtée lorsque la personne identifiée (34) s'approche de la machine (22) dans la zone de protection (30) à moins de la distance minimale (38).

11. Procédé selon la revendication 10, dans lequel la distance minimale (38) varie en fonction du mouvement actuel de la machine.

12. Procédé selon l'une des revendications 1 à 11, dans lequel la machine (22) est mise en oeuvre à vitesse réduite et/ou suivant une trajectoire modifiée lorsque le deuxième signal (65) est présent.

13. Dispositif de protection d'une zone de travail dangereuse (24) d'une machine à fonctionnement automatique (22), comprenant au moins une unité de détection (12) qui fournit une image 3D actuelle de la zone de travail (24) à des intervalles de temps définis, une unité de configuration (28) destinée à définir au moins une zone de protection (30) dans la zone de travail (24), et une unité d'évaluation (18) qui comporte un détecteur (50) infaillible, un classificateur (54) et un étage de sortie (19), dans lequel le détecteur d'objets étrangers (50) est conçu pour générer cycliquement un premier signal (51) lorsqu'un objet étranger se trouve dans la zone de protection (30) en fonction de l'image 3D actuelle respective et de la zone de protection (30) définie, dans lequel le premier signal (51) comprend une première information de position représentative d'une position de l'objet étranger dans la zone de protection (30), **caractérisé par** un dispositif de suivi de personne (66) et par un comparateur (68), dans lequel le classificateur (54) est conçu pour générer cycliquement un deuxième signal (65) lorsque l'objet étranger est identifié comme étant une personne (34), dans lequel le dispositif de suivi de personne (66) est conçu pour suivre la personne (34) identifiée dans une série d'images actuelles respectives et pour déterminer après chaque nouvelle image 3D une deuxième information de position (67) représentant une position actuelle de la personne (34) identifiée dans la zone de protection (30), dans lequel le comparateur (68) est conçu pour comparer les première et deuxième informations de position afin de vérifier si la première information de position du détecteur d'objets étrangers (50) et la deuxième information de position (67) du dispositif de suivi de personne (66) représentent chacune des positions identiques, et pour générer un troisième signal (69) en fonction de celles-ci, et dans lequel l'étage de sortie (19) est conçu pour générer un signal de commande afin d'arrêter la machine (22) en réponse au deuxième signal et en réponse au troisième signal, dans lequel le signal de commande est conçu pour arrêter la machine (22) lorsque la position de l'objet étranger selon la première information de position et la position de la personne identifiée selon la deuxième information de position sont différentes l'une de l'autre.

14. Produit de programme d'ordinateur comportant un support de données sur lequel est stocké un code de programme qui est conçu pour mettre en oeuvre un procédé comprenant toutes les étapes du procédé selon l'une des revendications 1 à 12 lorsque le code de programme est exécuté sur une unité d'évaluation d'un dispositif selon la revendication 13.
